# EUROPEAN PATENT APPLICATION

(11) **EP 0 590 561 A1**
(43) Date of publication of application: **06.04.1994**
(21) Application number: 93115545.1
(22) Date of filing: 27.09.1993
(51) Int. Cl.: B65G 39/06, B27B 25/02

(54) **Traction roller for parts to be machined**

(30) Priority: 01.10.1992 EP 92830548
(71) Applicant: SCM S.p.A., I-47040 Villa Verucchio, (Province of Forli) (IT)
(72) Inventor: Gemmani, Giuseppe, I-47037 Rimini (Prov. of Forli) (IT)
(74) Representative: Modiano, Guido, Dr.-Ing.

(57) **Abstract**

A traction roller for parts to be worked, particularly for feeding strips, square laths, panels and the like in wood-working machines, including a cylindrical metal sore covered with a covering of elastic rubber-like material, the hardness whereof increases from the inside outwards.

## Description

The present invention relates to a traction roller for parts to be machined, particularly for feeding strips, laths, panels and the like in wood-working machines.

In wood-working there is often the need to feed a machine with parts, the thickness whereof can vary even considerably. For example, in planing machines the parts are fed by means of a rotating roller which tangentially engages said parts, which rest on a flat surface, pushing them beneath the tool.

However, known rollers have operating limitations when they must move parts having different thicknesses. In this case, in fact, since the parts lie on a common plane, it is impossible to pull the thinner parts when the roller rests tangentially on the thicker parts.

In order to obviate this drawback, a roller composed of a plurality of mutually adjacent cylindrical sectors capable of performing radial strokes with respect to one another has already been proposed. However, such known rollers have hardly negligible disadvantages, which mainly consist in considerable mechanical complexity due to the need to provide elastic supports for the cylindrical sectors which allow radial movements thereof. This mechanical complexity negatively affects production costs, and there is a marked tendency to clog with sawdust and shavings that form during work.

A principal technical aim of the present invention is to provide a roller which is structured entirely differently from commercially available rollers and is suitable to ensure effective traction of parts which have different thickness without damaging the surfaces it engages.

A further aim of the present invention is to provide a roller capable of applying a tangential traction force even if the parts are fed unevenly and arrive beneath the roller side by side.

A further aim of the present invention is to provide a roller which does not require particular maintenance and has a low wear coefficient and thus a long working life.

With these and other aims in view, there is provided, according to the present invention, a roller which is characterized in that it comprises a cylindrical metal core covered with a covering of elastic rubber-like material, the hardness whereof increases from the inside outwards.

Further characteristics and advantages of the present invention will become apparent from the following detailed description of a preferred embodiment thereof, illustrated only by way of non-limitative example in the accompanying drawings, wherein:
figure 1 is a longitudinal sectional view of a roller according to the present invention;
figure 2 is a sectional view, taken along the plane II-II of figure 1.

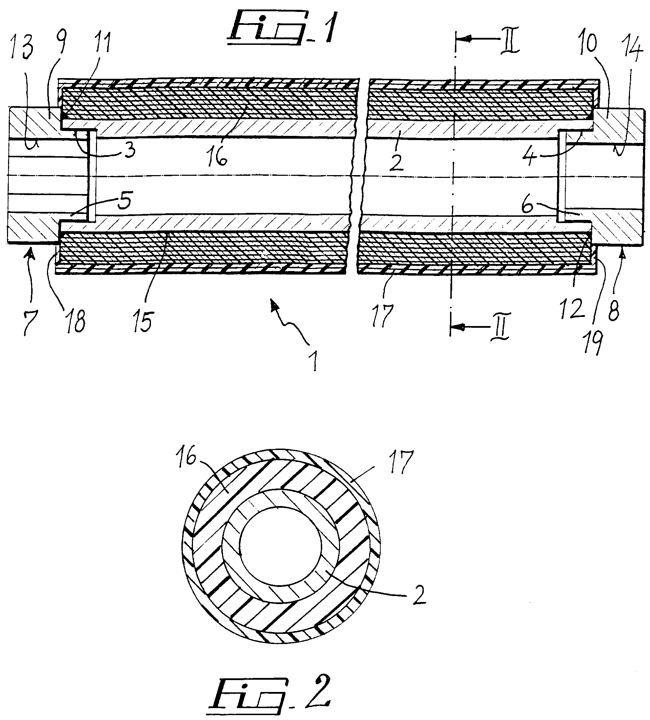

With reference to the above figures 1 and 2, the reference numeral 1 generally designates a roller according to the present invention.

The roller comprises a tubular core 2 which is constituted by a sleeve; two cylindrical seats 3 and 4 are formed at the opposite ends of said sleeve.

The tangs 5 and 6 of two respective hubs 7 and 8 are centered in said seats; said hubs furthermore have flanges 9 and 10 for abutment on the opposite heads of the tubular core 2.

The flanges 9 and 10 have a larger diameter than the tubular core 2, so as to form corners for the forming of welding beads 11 and 12 by means of which the hubs 7 and 8 are fixed to the tubular core.

Coaxial holes 13 and 14 are formed in the hubs 7 and 8, and the roller supporting shaft is driven through said holes. The hole 13 has a polygonal cross-section, so as to produce a side-fit engagement with a corresponding portion of the shaft which is suitable to determine a rotational coupling.

The wider diameter of the flanges 9 and 10 with respect to the tubular core forms a seat 15 in which an external covering, constituted by a sleeve made of elastic rubber-like material, is accommodated.

Said covering comprises an inner layer 16 made of a material which has predominant yielding prerogatives. A material suitable for the purpose is constituted, for example, by a natural rubber with a hardness comprised between 10 and 40 shore, preferably between 15 and 20 shore.

An outer layer 17, made of a material which has elasticity and wear-resistance characteristics, is arranged around the internal layer. A material with such characteristics is, for example, an elastomer which has a hardness comprised between 55 and 80 shore, preferably an elastomer commercially known by the trade-name ADIPRENE and manufactured by the US company Du Pont, or VULKOLLAN manufactured by the German company Bayer, both of which have a hardness comprised between 65 and 70 shore.

Advantageously, the outer layer 17 is glued onto the inner one and its thickness is a fraction of that of the inner layer, to allow a certain elastic deformability in compliance with the requirements of traction and of preventing tears caused by friction.

The described roller is completed by two collars 18 and 19 which cover the inner layer at the opposite ends and substantially have a finishing function.

The described roller, by virtue of its elastically deformable structure, perfectly achieves the intended aims.

In particular, the numerous tests conducted have revealed the ability to absorb variations which can be estimated at a few millimeters in the thickness of the parts to be worked. Indeed, the softer inner layer 16 allows greater penetration of the parts and thus allows to place the thinner parts in tangential contact with the outer layer, so as to ensure sufficient contact pressure and effective traction even when the parts having different thickness are contiguous.

The mechanical and elastic characteristics of the outer layer avoid excessive loads on the longitudinal edges of the thicker parts and thus avoid the possibility of damage thereof due to compression.

Numerous modifications and variations are possible in the practical embodiment of the invention, and all are within the scope of the inventive concept.

For example, the covering may be composed of a different number of layers according to the specific requirements.

Conceptually, the covering may be formed with a single layer, the hardness whereof increases progressively from the inside outwards.

According to a further inventive concept, the inner layer can be made of elastically compressible material, for example foamed elastomers and the like.

In the practical embodiment of the invention, the diameter and length of the rollers may be any.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Traction roller for parts to be worked, particularly for feeding strips, square laths, panels and the like in wood-working machines, characterized in that it comprises a cylindrical metal core covered with a covering of elastic rubber-like material, the hardness whereof increases from the inside outwards.

2. Roller according to claim 1, characterized in that said covering comprises an inner layer which has a hardness comprised between 10 and 40 shore and an outer layer which has a hardness comprised between 55 and 80 shore.

3. Roller according to claim 2, characterized in that said internal layer is constituted by natural rubber which has a hardness comprised between 15 and 20 shore.

4. Roller according to claim 2 or 3, characterized in that said outer layer is constituted by an elastomer which is commercially known by the trade-name ADIPRENE or VULKOLLAN and has a hardness comprised between 65 and 70 shore.

5. Roller according to one of the preceding claims, characterized in that said tubular core comprises a sleeve, respective hubs being rigidly coupled to the opposite ends of said sleeve, said hubs having flanges which form a seat for said covering together with the outer surface of said sleeve.
